# EUROPÄISCHE PATENTANMELDUNG

(11) **EP 3 672 050 A1**
(43) Veröffentlichungstag der Anmeldung: **24.06.2020**
(21) Anmeldenummer: 18214039.2
(22) Anmeldetag: 19.12.2018
(51) Int. Cl.: H02M 1/32, H02M 1/44, H02M 5/458

(54) **VERFAHREN ZUM BETRIEB EINER ELEKTRISCHEN VERSORGUNGSEINRICHTUNG SOWIE ELEKTRISCHE VERSORGUNGSEINRICHTUNG**

(71) Anmelder: Siemens Aktiengesellschaft, 80333 München (DE)
(72) Erfinder: Weis, Benno, 91334 Hemhofen (DE)

(57) **Zusammenfassung**

Es wird ein Verfahren zum Betrieb einer elektrischen Versorgungseinrichtung (2) angegeben, die netzseitig an ein elektrisches Versorgungsnetz (4) angeschlossen ist und einen Frequenzumrichter (8), der einen netzseitigen Stromrichter (10) und einen Zwischenkreis (12) aufweist sowie einen Netzfilter (20), der dem netzseitigen Stromrichter (10) vorgeschaltet ist, aufweist. Während eines Pulssperren-Betriebszustand wird überprüft, ob ein gefährlicher Zustand für den Netzfilter (20) vorliegt und nur im Fall eines Vorliegens des gefährlichen Zustands nur der netzseitige Stromrichter (10) derart angesteuert, dass eine den gefährlichen Zustand des Netzfilters (20) verursachende Netzrückwirkung zumindest gedämpft wird, sodass der Netzfilter (20) vor dem gefährlichen Zustand geschützt wird. Es wird weiterhin eine elektrische Versorgungseinrichtung angegeben.

## Beschreibung

Die Erfindung betrifft ein Verfahren zum Betrieb einer elektrischen Versorgungseinrichtung sowie eine elektrische Versorgungseinrichtung.

Ein Einsatz von nichtlinearen Verbrauchern wie z.B. schaltenden Betriebsmitteln, die an ein elektrisches Versorgungsnetz angeschlossen sind, hat zur Folge, dass Spannungsabsenkungen, -verzerrungen und allgemein zusätzliche Verluste (auch als Netzrückwirkungen bezeichnet) in das elektrische Versorgungsnetz gespeist werden. Das elektrische Versorgungsnetz dient ebenfalls als ein Koppelelement zwischen vielen unterschiedlichen Verbrauchern, die jeweils an das elektrische Versorgungsnetz angeschlossen sind, sodass sich eine Netzrückwirkung eines an das Versorgungsnetz angeschlossenen Verbrauchers auf andere ebenfalls an das Versorgungsnetz angeschlossene Verbraucher - insbesondere negativ - auswirkt.

Um derartige Netzrückwirkungen möglichst gering zu halten, sind üblicherweise zwischen dem elektrischen Versorgungsnetz und den nichtlinearen Verbrauchern Netzfilter angeschlossen. Eine Einheit aus Netzfilter und nichtlinearem Verbraucher wird nachfolgend auch als elektrische Versorgungseinrichtung bezeichnet.

Derartige Netzfilter sind beispielsweise auch Frequenzumrichtern vorgeschaltet, um Netzrückwirkung, die durch den Schaltbetrieb des Frequenzumrichters verursacht werden, möglichst gering zu halten und vorzugsweise vollständig abzuschwächen.

Üblicherweise sind die Netzfilter, die Frequenzumrichtern vorgeschaltet sind als passive Netzfilter ausgebildet, d. h. diese Netzfilter weisen keine aktiv ansteuerbaren Schaltelemente auf. Vielmehr weisen derartige passive Netzfilter beispielsweise Filterwiderstände und/oder Filterkondensatoren auf.

Derartige passive Filter sind jedoch insbesondere in Abhängigkeit eines Betriebszustandes des Frequenzumrichters anfällig für Netzrückwirkungen, die beispielsweise von einem anderen Verbraucher erzeugt werden und über das elektrische Versorgungsnetz zu dem Netzfilter geleitet werden.

Ausgehend hiervon liegt der Erfindung die Aufgabe zugrunde, ein Verfahren zum Betrieb einer elektrischen Versorgungseinrichtung sowie eine elektrische Versorgungseinrichtung anzugeben, mit deren Hilfe ein Netzfilter hinreichend vor Netzrückwirkungen geschützt ist.

Die auf das Verfahren gerichtete Aufgabe wird erfindungsgemäß gelöst durch ein Verfahren zum Betrieb einer elektrischen Versorgungseinrichtung mit den Merkmalen des Anspruchs 1. Vorteilhafte Ausgestaltungen, Weiterbildungen und Varianten sind Gegenstand der Unteransprüche.

Die elektrische Versorgungseinrichtung ist netzseitig an ein elektrisches Versorgungsnetz angeschlossen
Bei dem elektrischen Versorgungsnetz handelt es sich vorzugsweise um ein Drehstromnetz mit einer Spannung im Bereich von 300V bis 500V.

Die elektrische Versorgungseinrichtung weist hierbei einen Frequenzumrichter auf, der einen netzseitigen Stromrichter und einen Zwischenkreis aufweist.

Weiterhin weist die elektrische Versorgungseinrichtung, wie bereits eingangs erwähnt, einen Netzfilter auf, der dem netzseitigen Stromrichter vorgeschaltet ist. Unter vorgeschaltet wird hierbei verstanden, dass ausgehend von dem elektrische Versorgungsnetz in Richtung des Frequenzumrichters betrachtet ein aus dem elektrischen Versorgungsnetz fließender elektrischer Strom erst durch den Netzfilter und dann in den Frequenzumrichter fließt.

Während eines Pulssperren-Betriebszustand wird überprüft, ob ein gefährlicher Zustand für den Netzfilter vorliegt. Unter dem Pulssperren-Betriebszustand, auch lediglich nur als Pulssperre bezeichnet, wird hierbei ein Betriebszustand des Frequenzumrichters verstanden, bei dem keine Schaltpulse an typischerweise innerhalb des Frequenzumrichters angeordnete Schaltelemente übermittelt werden.

Bei dem Betriebszustand Pulssperre handelt es sich somit insbesondere um einen "Stand-By-Modus". Der Frequenzumrichter ist somit im Pulssperren-Betriebszustand inaktiv.

Unter dem gefährlichen Zustand wird hierbei speziell ein aufgrund der bereits eingangs erwähnten Netzrückwirkungen bedingter Zustand verstanden, in dem der Netzfilter zerstört werden kann. Die potentielle Zerstörung des Netzfilters im gefährlichen Zustand beruht hierbei auf unzulässig hohen Spannungen und/oder Strömen, die in diesem gefährlichen Zustand auftreten und zu einer Zerstörung des Netzfilters führen können.

Nur im Fall eines Vorliegens des gefährlichen Zustands wird nur der netzseitige Stromrichter derart angesteuert, dass eine den gefährlichen Zustand des Netzfilters verursachende Netzrückwirkung zumindest gedämpft wird und vorzugsweise komplett abgeschwächt wird. Somit ist der Netzfilter vor dem gefährlichen Zustand geschützt.

Diese Ausgestaltung beruht insbesondere auf dem Gedanken, dass üblicherweise speziell im Pulssperren-Betriebszustand der Frequenzumrichter aufgrund seines "inaktiven Zustands" nicht derart aktiv angesteuert ist, dass Netzrückwirkungen, die für den gefährlichen Zustand ursächlich sind gedämpft oder gar in Gänze abgeschwächt werden.

Durch das Ansteuern des netzseitigen Stromrichters beim Vorliegen des gefährlichen Zustands ist jedoch auch im Pulssperren-Betriebszustand ein Schutz des Netzfilters vor dem gefährlichen Zustand erreicht, ohne den Pulssperren-Betriebszustand in Gänze aufzuheben.

Weiterhin ist hierdurch ein insbesondere verlustarmer Schutz des Netzfilters erreicht. D.h. dadurch, dass nur beim Vorliegen des gefährlichen Zustands für den Netzfilter der netzseitige Stromrichter angesteuert und somit aktiviert wird, erzeugt dieser auch nur in diesem angesteuerten Zustand elektrische Verluste. Liegt während des Pulssperren-Betriebszustands kein gefährlicher Zustand für den Netzfilter vor, verbleibt der Frequenzumrichter in diesem inaktiven Betriebszustand und verbraucht somit keine elektrische Energie und/oder erzeugt keine elektrischen Verluste.

Weiterhin kann auf aufwändige und/oder zusätzliche Schutzelemente, wie beispielsweise Dämpfungswiderstände, innerhalb des Netzfilters verzichtet werden. Derartige zusätzliche Schutzelemente führen nämlich üblicherweise nicht nur zu einer aufwändigeren Ausgestaltung des Netzfilters, sie erzeugen zudem auch noch unerwünschte, hohe elektrische Verluste.

Bevorzugt wird der netzseitige Stromrichter bei Vorliegen des gefährlichen Zustands automatisch angesteuert. D.h. der netzseitige Stromrichter wird selbstständig, also autark, ohne externen Schaltbefehl angesteuert. Mit anderen Worten ist somit kein aktives Ansteuern, beispielsweise durch eine Person erforderlich. Hierdurch sind eine besonders einfache und aufwandsarme Implementierung sowie eine zeitsparende Ansteuerung des netzseitigen Stromrichters bei Vorliegen des gefährlichen Zustands erreicht.

Zweckdienlicherweise ist der Frequenzumrichter lastseitig an eine elektrische Last angeschlossen. Alternativ ist der Frequenzumrichter an mehrere elektrische Lasten angeschlossen. Unter der elektrischen Last wird hierbei vorzugsweise eine oder mehrere elektrische Maschinen, beispielsweise Elektromotoren, verstanden.

Während des Pulssperren-Betriebszustands ist die lastseitig angeschlossene elektrische Last vorzugsweise leistungsfrei geschaltet, sodass beispielsweise die als Elektromotor ausgebildete Last vor einem Wiederanlauf geschützt ist.

Dadurch, dass beim Vorliegen des gefährlichen Zustands nur der netzseitige Stromrichter angesteuert wird, ist hierdurch weiterhin zweckdienlicherweise die Leistungsfreischaltung der elektrischen Last während des Pulssperren-Betriebszustands sichergestellt.

Vorzugsweise handelt es sich bei dem Netzfilter um einen passiven Netzfilter mit mindestens einem Filterkondensator. Unter dem passiven Netzfilter wird hierbei ein Netzfilter verstanden, der speziell keine aktiven Bauelemente, wie zum Beispiel Schaltelemente aufweist. Alternativ zu dem Filterkondensator weist der passive Netzfilter eine Filterkondensatorbank auf, die ihrerseits mehrere Filterkondensatoren aufweist.

Im Fall, dass an den Frequenzumrichter lastseitig keine elektrische Last angeschlossen ist, wird dieser und insbesondere die elektrische Versorgungseinrichtung auch als ein aktiver Filter bezeichnet, da die vorstehend beschriebenen, beim passiven Filter fehlenden, aktiven Schaltelemente dann durch die Schaltelemente des Frequenzumrichters realisiert werden.

Gemäß einer bevorzugten Ausgestaltung wird das Vorliegen des gefährlichen Zustands durch eine Erfassung einer Zwischenkreis-Überspannung innerhalb des Zwischenkreises des Frequenzumrichters identifiziert. Hierbei wird speziell eine Erfassungseinheit zur Erfassung der Zwischenkreis-Überspannung herangezogen. Die Erfassungseinheit ist vorzugsweise als ein Spannungsmesselement ausgebildet, weist alternativ ein derartiges Spannungsmesselement auf oder ist weiterhin alternativ mit einem derartigen Spannungsmesselement elektrisch verbunden. Diese Ausgestaltung der Identifizierung des Vorliegens des gefährlichen Zustandes ist besonders bevorzugt, da eine Spannung innerhalb des Zwischenkreises des Frequenzumrichters üblicherweise im Rahmen einer Regelung des Frequenzumrichters erfasst wird, und somit eine Erfassung der Zwischenkreis-Überspannung innerhalb des Zwischenkreises besonders einfach erfolgen kann. Zudem wird hierbei auf zusätzliche Bauelemente verzichtet.

Alternativ oder ergänzend wird das Vorliegen des gefährlichen Zustands durch eine Erfassung einer Kondensator-Überspannung an dem Filterkondensator des Netzfilters identifiziert. Die Erfassungseinheit ist hierbei alternativ oder ergänzend dazu ausgebildet, die Kondensator-Überspannung an dem Filterkondensator zu erfassen und weist hierzu entweder ein Spannungsmesselement auf, ist alternativ als ein derartiges Spannungsmesselement ausgebildet oder ist weiterhin alternativ mit einem derartigen Spannungsmesselement elektrisch verbunden.

Weiterhin alternativ oder ergänzend wird das Vorliegen des gefährlichen Zustands durch eine Erfassung eines Netz-Überstromes innerhalb des Versorgungsnetzes identifiziert. Hierbei wird ebenfalls bevorzugt die Erfassungseinheit herangezogen, die gemäß dieser alternativen oder ergänzenden Variante entweder ein Strommesselement aufweist, oder als ein solches Strommessgerät ausgebildet ist oder weiterhin alternativ hierzu mit einem derartigen Strommesselement elektrisch verbunden ist.

Unter den beiden vorstehend beschriebenen Überspannungen sowie dem vorstehend beschriebenen Überstrom werden hierbei vorzugsweise Schwellwerte für zu ermittelnden Spannungen und/oder des zu ermittelnden Stromes verstanden, bei deren Überschreiten das Vorliegen des gefährlichen Zustands identifiziert wird. Der Spannungsschwellwert liegt z.B. vorzugsweise um 10% und speziell um 15% über der regulären Betriebsspannung der jeweiligen elektrischen Last.

Vorzugsweise weist der Frequenzumrichter zusätzlich einen lastseitigen Stromrichter auf. Der lastseitige Stromrichter ist somit zweckdienlicherweise zwischen dem Zwischenkreis und beispielsweise einer lastseitig an den Frequenzumrichter angeschlossenen Last angeordnet und speziell elektrisch angeschlossen. Der lastseitige Stromrichter dient hierbei bevorzugt einer Bereitstellung eines Wechselstromes für die lastseitig angeschlossene Last.

Gemäß einer bevorzugten Ausgestaltung ist der Frequenzumrichter als ein Active Front End ausgebildet. Derartige Active Front End Umrichter weisen speziell im netzseitigen Stromrichter Schaltelemente auf, mittels denen sie dazu ausgebildet und eingerichtet sind, Spannungs- und/oder Stromschwankungen seitens des Versorgungsnetzes und/oder seitens des Frequenzumrichters abzudämpfen, beispielsweise in Form einer Energierückspeisung in das elektrische Versorgungsnetz. Ebenso beruht die Ausbildung des Netzfilters als passiver Netzfilter auf der Überlegung, dass Active Front End Umrichter üblicherweise solche Spannungs- und/oder Stromschwankungen (beispielsweise in Form von Oberschwingungen) erzeugen, die lediglich mit derartigen passiven Netzfiltern gedämpft werden können.

Mit der Ausbildung des Frequenzumrichters als ein Active Front End Umrichter ist es somit ermöglicht, beim Vorliegen des gefährlichen Zustandes für den Netzfilter durch Ansteuerung des netzseitigen Stromrichters den Netzfilter besonders einfach vor dem gefährlichen Zustand zu schützen.

Zweckdienlicherweise sind der Frequenzumrichter und der Netzfilter in einem gemeinsamen Gehäuse angeordnet. Der Vorteil hierbei ist in einer besonders vorteilhaften Implementierung der Versorgungseinrichtung zu sehen.

Vorzugsweise erfolgt das automatische Ansteuern des netzseitigen Stromrichters bei Vorliegen des gefährlichen Zustandes für den Netzfilter mittels einer Steuereinheit. Hierbei wird vorzugsweise eine Steuereinheit herangezogen, die auch zu einer Ansteuerung des Frequenzumrichters in einem normalen Betrieb dient. Die Steuereinheit ist hierbei vorzugsweise Teil der Versorgungseinrichtung und steuert die jeweils innerhalb des netzseitigen Stromrichters und des lastseitigen Stromrichters angeordneten Schaltelemente mit Schaltpulsen an.

Ein weiterer Vorteil hierbei ist, dass, wie bereits erwähnt, keine zusätzlichen Bauelemente, insbesondere im Hinblick auf die Ansteuerung des netzseitigen Stromrichters bei Vorliegen des gefährlichen Zustandes benötigt werden.

Die auf die elektrische Versorgungseinrichtung gerichtete Aufgabe wird erfindungsgemäß gelöst durch eine elektrische Versorgungseinrichtung mit den Merkmalen des Anspruchs 11.

Die elektrische Versorgungseinrichtung ist hierbei zum Anschluss an ein elektrisches Versorgungsnetz ausgebildet. Weiterhin ist die elektrische Versorgungseinrichtung insbesondere zur Durchführung des vorstehend beschriebenen Verfahrens ausgebildet.

Hierzu weist die elektrische Versorgungseinrichtung einen Frequenzumrichter auf, der einen netzseitigen Stromrichter und einen Zwischenkreis aufweist.

Weiterhin weist die elektrische Versorgungseinrichtung einen Netzfilter auf, der dem netzseitigen Stromrichter vorgeschaltet ist. Der Frequenzumrichter ist hierbei derart eingerichtet, während eines Pulssperren-Betriebszustands eine beispielsweise (lastseitig) angeschlossene elektrische Last leistungsfrei zu schalten.

Weiterhin ist eine Erfassungseinheit vorgesehen, die derart eingerichtet ist, zu überprüfen und zu identifizieren, ob ein gefährlicher Zustand vorliegt. Diese Überprüfung erfolgt entweder durch eine Überprüfung einer Spannung an einem Filterkondensator des Netzfilters oder durch eine Überwachung eines Netzstromes des elektrischen Versorgungsnetzes. Besonders bevorzugt erfolgt die Überprüfung auf den gefährlichen Zustand jedoch durch eine Überprüfung einer Spannung innerhalb des Zwischenkreises des Frequenzumrichters.

Der Frequenzumrichter ist weiterhin derart eingerichtet, nur im Fall eines Vorliegens des gefährlichen Zustands nur den netzseitigen Stromrichter derart anzusteuern, dass eine den gefährlichen Zustand des Netzfilters verursachende Netzrückwirkung zumindest gedämpft wird. Vorzugsweise ist der Frequenzumrichter hierbei derart eingerichtet, die Netzrückwirkung vollständig abzuschwächen.

Hierdurch ist es erreicht, den Netzfilter vor dem gefährlichen Zustand zu schützen.

Bevorzugt weist der Frequenzumrichter zusätzlich einen lastseitigen Stromrichter auf.

Die im Hinblick auf das Verfahren aufgeführten Vorteile und bevorzugten Ausgestaltungen sind sinngemäß auf die elektrische Versorgungseinrichtung zu übertragen und umgekehrt.

Ein Ausführungsbeispiel der Erfindung wird nachfolgend anhand der Figur näher erläutert. Diese zeigt in teilweise stark vereinfachter Darstellung:

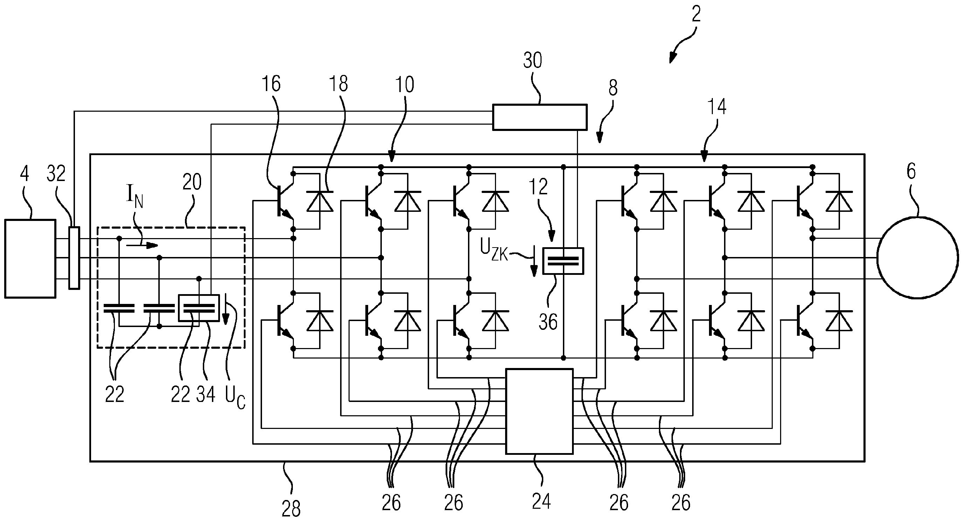

- FIG 1: ein schematisiertes Schaltbild einer elektrischen Versorgungseinrichtung.

FIG 1 zeigt ein schematisiertes Schaltbild einer elektrischen Versorgungseinrichtung 2, die netzseitig an ein elektrisches Versorgungsnetz 4 sowie im Ausführungsbeispiel lastseitig an eine elektrische Last 6 angeschlossen ist. Ein (lastseitiger) Anschluss der elektrischen Last 6 ist jedoch nicht zwingend erforderlich und dient im Ausführungsbeispiel lediglich dem besseren Verständnis.

Bei dem elektrischen Versorgungsnetz 4 handelt es sich vorzugsweise um ein Drehstromnetz, welches in FIG 1 lediglich schematisiert mittels eines Rechtecks dargestellt ist. Bei der elektrischen Last 6 handelt es sich im Ausführungsbeispiel gemäß FIG 1 um eine elektrische Maschine, speziell um einen Elektromotor.

Weiterhin weist die elektrische Versorgungseinrichtung 2 einen Frequenzumrichter 8 auf, der einen netzseitigen Stromrichter 10, einen Zwischenkreis 12 sowie einen lastseitigen Stromrichter 14 aufweist. Sowohl der netzseitige Stromrichter 10 als auch der lastseitige Stromrichter 14 weisen jeweils sechs beispielsweise als Halbleiterschalter ausgebildete Schaltelemente 16 auf.

Parallel zu jedem Schaltelement 16 ist eine Diode 18 mit ihrer Durchflussrichtung entgegen der Durchlassrichtung des jeweiligen Schaltelements 16 angeordnet.

Auf das allgemeine Funktionsprinzip des Frequenzumrichters 8 wird hierbei nicht eingegangen.

Die elektrische Versorgungseinrichtung 2 weist weiterhin einen Netzfilter 20 auf, der dem netzseitigen Stromrichter 10 vorgeschaltet ist.

Der Netzfilter 20 weist weiterhin vorzugsweise einen Filterkondensator 22, im Ausführungsbeispiel drei Filterkondensatoren 22 auf. Hierbei ist jeweils für eine Phase des dreiphasigen elektrischen Versorgungsnetzes 4 ein Filterkondensator 22 vorgesehen. Der Netzfilter 20 kann auch weitere passive Bauelemente wie Drosseln, Widerstände oder Dioden aufweisen. Auch mechanische Schaltgeräte wie z.B. Schütze können alternativ in dem Netzfilter 20 angeordnet sein.

Weiterhin weist die elektrische Versorgungseinrichtung 2 im Ausführungsbeispiel eine Steuereinheit 24 auf, die derart eingerichtet ist, die beiden Stromrichter 10, 14 und speziell deren Schaltelemente 16 mit Schaltpulsen über Steuerleitungen 26 anzusteuern.

Sowohl die Steuereinheit 24 als auch der Frequenzumrichter 8 sind in einem gemeinsamen Gehäuse 28 angeordnet.

Die elektrische Versorgungseinrichtung 2 und insbesondere der Frequenzumrichter 8 ist derart eingerichtet, in einem Pulssperren-Betriebszustand die im Ausführungsbeispiel vorhandene elektrische Last 6 über den lastseitigen Stromrichter 14 leistungsfrei zu schalten. Weiterhin ist der Frequenzumrichter 8 derart eingerichtet, nur im Fall eines Vorliegens eines gefährlichen Zustands für den Netzfilter 20 nur den netzseitigen Stromrichter 10 mittels der Steuereinheit 24 derart anzusteuern, dass der Netzfilter 20 vor dem gefährlichen Zustand geschützt ist.

Zur Detektion und insbesondere Identifikation des gefährlichen Zustands weist die elektrische Versorgungseinrichtung 2 im Ausführungsbeispiel eine Erfassungseinheit 30 auf. Das Vorliegen des gefährlichen Zustands wird mittels der Erfassungseinheit 30 beispielsweise durch eine Erfassung eines Netz-Überstromes I_{N} identifiziert. Hierzu ist im Ausführungsbeispiel ein Strommesselement 32 vorgesehen, welches den Netzstrom misst und diesen Wert an die Erfassungseinheit 30 übermittelt. Der gefährliche Zustand liegt in diesem Fall also vor, wenn der Netzstrom des elektrischen Versorgungsnetzes 4 einen vorgegebenen Schwellwert überschreitet.

Weiterhin ist im Ausführungsbeispiel vorgesehen, den gefährlichen Zustand für den Netzfilter 20 derart zu identifizieren, dass eine Kondensator-Überspannung Uc an einem der Filterkondensatoren 22 erfasst wird und an die Erfassungseinheit 30 übermittelt wird. Übersteigt die Spannung an einem der Filterkondensatoren 22 einen vorgegebenen Wert, so liegt der gefährliche Zustand für den Netzfilter 20 vor. Zur Erfassung der Kondensator-Überspannung Uc, welche an einem der Filterkondensatoren 22 abfällt, ist ein erstes Spannungsmesselement 34 innerhalb des Netzfilters 20 angeordnet.

Als dritte und besonders bevorzugte Variante zur Identifikation des gefährlichen Zustands für den Netzfilter 20 ist im Ausführungsbeispiel vorgesehen, eine Zwischenkreis-Überspannung U_{ZK} des Zwischenkreises 12 zu detektieren. Hierbei ist innerhalb des Zwischenkreises 12 ein zweites Spannungsmesselement 36 angeordnet, welches mit der Erfassungseinheit 30 verbunden ist.

Der Erfassung Zwischenkreis-Überspannung U_{ZK} als besonders bevorzugte Variante liegt der Gedanke zugrunde, dass eine derartige Spannung in einem Normalbetrieb des Frequenzumrichters 8 für eine Regelung ohnehin erfasst wird, und somit auf zusätzliche Bauteile verzichtet werden kann. D.h. das zweite Spannungsmesselement 36 ist somit nicht zusätzlich zur Identifizierung des gefährlichen Zustandes anhand der Zwischenkreis-Überspannung U_{ZK} im Frequenzumrichter 8 angeordnet. Vielmehr wird ein standardmäßig im Zwischenkreis 12 angeordnetes Spannungsmesselement als das zweite Spannungsmesselement 36 herangezogen.

Bei Vorliegen des gefährlichen Zustands wird seitens der Erfassungseinheit 30 ein Signal an die Steuereinheit 24 übermittelt, sodass diese vorzugsweise automatisch, d. h. selbstständig ein Ansteuersignal an die Schaltelemente 16 des netzseitigen Stromrichters 10 übermittelt, sodass dieser hierdurch derart angesteuert wird, dass die den gefährlichen Zustand hervorrufenden Netzrückwirkung aus dem elektrischen Versorgungsnetzes 4 vorzugsweise gedämpft und insbesondere vollständig kompensiert werden, sodass der Netzfilter 20 vor dem gefährlichen Zustand und somit auf einer Zerstörung geschützt wird.

Die Erfindung ist nicht auf das vorstehend beschriebene Ausführungsbeispiel beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit dem Ausführungsbeispiel beschriebenen Einzelmerkmale auch auf andere Weise miteinander kombinierbar, ohne den Gegenstand der Erfindung zu verlassen.

Insbesondere ist die Erfindung auch auf Frequenzumrichter anwendbar, die lediglich einen passiven Netzfilter, einen (aktiven) netzseitigen Stromrichter und einen Zwischenkreis aufweisen. In diesem Fall bildet der Frequenzumrichter entweder einen aktiven Netzfilter oder eine elektrische Versorgungseinrichtung für ein Gleichstrom-Netz (DC-Netz) aus.

## Patentansprüche

1. Verfahren zum Betrieb einer elektrischen Versorgungseinrichtung (2), die netzseitig an ein elektrisches Versorgungsnetz (4) angeschlossen ist und aufweist:
- einen Frequenzumrichter (8), der einen netzseitigen Stromrichter (10) und einen Zwischenkreis (12) aufweist sowie
- einen Netzfilter (20), der dem netzseitigen Stromrichter (10) vorgeschaltet ist,
wobei
- während eines Pulssperren-Betriebszustand überprüft wird, ob ein gefährlicher Zustand für den Netzfilter (20) vorliegt, und
- nur im Fall eines Vorliegens des gefährlichen Zustands nur der netzseitige Stromrichter (10) derart angesteuert wird, dass eine den gefährlichen Zustand des Netzfilters (20) verursachende Netzrückwirkung zumindest gedämpft wird, sodass der Netzfilter (20) vor dem gefährlichen Zustand geschützt wird.

2. Verfahren nach dem vorhergehenden Anspruch,
wobei der netzseitige Stromrichter (10) bei Vorliegen des gefährlichen Zustands automatisch angesteuert wird.

3. Verfahren nach einem der beiden vorhergehenden Ansprüche,
wobei es sich bei dem Netzfilter (20) um einen passiven Netzfilter mit zumindest einem Filterkondensator (22) handelt.

4. Verfahren nach einem der vorhergehenden Ansprüche,
wobei das Vorliegen des gefährlichen Zustands durch eine Erfassung einer Zwischenkreis-Überspannung (U_{ZK}) innerhalb des Zwischenkreises (12) des Frequenzumrichters (8) mittels einer Erfassungseinheit (30) identifiziert wird.

5. Verfahren nach Anspruch 3,
wobei das Vorliegen des gefährlichen Zustands durch eine Erfassung einer Kondensator-Überspannung (U_{C}) an dem Filterkondensator (22) mittels der Erfassungseinheit (30) identifiziert wird.

6. Verfahren nach einem der vorhergehenden Ansprüche,
wobei das Vorliegen des gefährlichen Zustands durch eine Erfassung eines Überstromes (I_{N}) innerhalb des Versorgungsnetzes (4) mittels der Erfassungseinheit (30) identifiziert wird.

7. Verfahren nach einem der vorhergehenden Ansprüche,
wobei der Frequenzumrichter zusätzlich einen lastseitigen Stromrichter (14) aufweist.

8. Verfahren nach einem der vorhergehenden Ansprüche,
wobei der Frequenzumrichter als ein Active Front End ausgebildet ist.

9. Verfahren nach einem der vorhergehenden Ansprüche,
wobei der Frequenzumrichter (8) und der Netzfilter (20) in einem gemeinsamen Gehäuse (28) angeordnet sind.

10. Verfahren nach einem der vorhergehenden Ansprüche und Anspruch 2,
wobei das automatische Ansteuern des netzseitigen Stromrichters (10) bei Vorliegen des gefährlichen Zustands mittels einer Steuereinheit (24) erfolgt.

11. Elektrische Versorgungseinrichtung (2), zum Anschluss an ein elektrisches Versorgungsnetz (4), aufweisend:
- einen Frequenzumrichter (8), der einen netzseitigen Stromrichter (10) und einen Zwischenkreis (12) aufweist sowie
- einen Netzfilter (20), der dem netzseitigen Stromrichter (10) vorgeschaltet ist,
wobei
- eine Erfassungseinheit (30) vorgesehen ist, die derart eingerichtet ist, während eines Pulssperren-Betriebszustandes zu überprüfen, ob ein gefährlicher Zustand für den Netzfilter (20) vorliegt und
- der Frequenzumrichter (8) weiterhin derart eingerichtet ist, nur im Fall eines Vorliegens des gefährlichen Zustands nur den netzseitigen Stromrichter (10) derart anzusteuern, dass eine den gefährlichen Zustand des Netzfilters (20) verursachende Netzrückwirkung zumindest gedämpft wird, sodass der Netzfilter (20) vor dem gefährlichen Zustand geschützt ist.

12. Elektrische Versorgungseinrichtung (2) nach dem vorhergehenden Anspruch,
wobei der Frequenzumrichter (8) zusätzlich einen lastseitigen Stromrichter (14) aufweist.
